# EUROPEAN PATENT SPECIFICATION

(11) **EP 2 545 560 B1**
(45) Date of publication and mention of the grant of the patent: **22.01.2014**
(21) Application number: 11711686.3
(22) Date of filing: 10.03.2011
(51) Int. Cl.: G21G 1/06

(54) **METHOD OF PRODUCING RADIONUCLIDES**
VERFAHREN ZUR HERSTELLUNG VON RADIONUKLIDEN
PROCÉDÉ DE PRODUCTION DE RADIONUCLÉIDES

(30) Priority: 10.03.2010 ZA 201001726
(43) Date of publication of application: 16.01.2013
(73) Proprietor: The South African Nuclear Energy Corporation Limited, 0250 Brits (ZA); Technische Universiteit Delft, 2629 JB Delft (NL)
(72) Inventor: JANSEN, David, Randall, 0184 Silverton (ZA); KRIJGER, Geert, Cornelis, NL-1054 JN Amsterdam (NL); KOLAR, Zvonimir, Ivica, NL-2624 NV Delft (NL); ZEEVAART, Jan, Rijn, 0182 Pretoria (ZA)
(74) Representative: Jakobsson, Jeanette Helene
(86) International application number: PCT/IB2011/050998
(87) International publication number: WO 2011/111010

(56) References cited:
- US-A- 2 161 985
- US-A- 5 586 153
- US-A1- 2005 082 469

## Description

THIS INVENTION relates to production of radionuclides. More particularly, the invention relates to radionuclides produced according to the Szilard-Chalmers principle and having a high specific activity. The invention accordingly provides for a method of producing such radionuclides, and extends also to radionuclides produced by the method. The invention also provides for a radionuclide production arrangement.

A common cause of complications in the treatment of cancer in patients is metastasis of the cancer, particularly in bone. Metastasis is a condition whereby the cancer spreads from a primary site thereof in the body, such as the breast or prostate, and localizes in another organ, such as bone. Pain and discomfort are common symptoms and side effects of metastatic bone cancer, and usually renders separate therapy or treatment of the cancer at the primary site futile, often resulting in the cancer being fatal to the patient. Palliation of bone pain emanating from metastatic bone disease, is generally effected by radionuclide therapy (RNT), also known as radioisotope therapy (RIT). RNT, or RIT, involves administering a radiation source to a target area, such as bone to which the cancer has spread, thereby to irradiate the target area and to contain cancerous growth in the area. This may serve to reinforce and supplement the separate treatment of the primary cancer. Particularly in the treatment of bone metastasis, radiation sources with short range emission and high specific activity are desired, so as respectively to reduce the exposure of sensitive bone marrow to radiation and to obtain a high anti-tumour effect with limited or minimal radiation dosage, thereby reducing radiation exposure to the rest of the body.

It is well known in the field of the invention that high specific activity radionuclides, including metastable radionuclides, can be produced by irradiating a suitable target medium, comprising a target nuclide material, with neutron irradiation so that incident neutrons react with target nuclei in the target nuclide material to effect a neutron (n) absorption - gamma (γ) emission nuclear reaction, also expressed as (n, γ). Resulting metastable radionuclides in the target medium gain high recoil energy from the γ-emission and are ejected or recoiled from the original target lattice, i.e. the target nuclide material. These ejected radionuclides are then captured and trapped in a recoil capture material or medium (RCM), which is provided in close proximity with the target medium, with the ejected radionuclides thus being separated from inactive or cold target nuclei in the target nuclide material. The ejected metastable radionuclides are thus concentrated or enriched, relative to the cold nuclei, in the recoil capture material. This process is generally referred to as the Szilard-Chalmers principle. The recoil nuclei are then recovered from the recoil capture material.

The present invention seeks to provide a viable method of producing radionuclides with high specific activity and short range radiation emission using the Szilard-Chalmers principle.

Thus, in accordance with the invention, there is provided a method of producing radionuclides, which includes
in an irradiation zone, irradiating a target medium, comprising at least a target nuclide material, with neutron irradiation, thereby causing radionuclides to form in the target nuclide material, with at least some of the formed radionuclides being ejected from the target nuclide material; and
capturing and collecting the ejected radionuclides in a carbon-based recoil capture material which does not have an empty cage structure at crystallographic level.

The target nuclide material may be selected from the group consisting of a pure metal and a metal compound. Preferably, the target nuclide material may comprise a metal compound, including a metal oxide, a metal salt, or an organometallic compound. The metal of the target nuclide material may, in particular, be selected from the group of metal elements in the Periodic Table of Elements extending from scandium (Sc), of atomic number 21, to bismuth (Bi), of atomic number 83, both elements included, with the non-metal elements arsenic (As), selenium (Se), bromine (Br), krypton (Kr), tellurium (Te), iodine (I) and xenon (Xe) thus being excluded. Preferably, the metal may be tin (Sn). In such case, the target nuclide material may thus typically be selected from elemental tin or tin metal, as well as from oxides of tin, including tin(II) oxide (SnO) and tin(IV) dioxide (SnO₂). The target nuclide material may instead be selected from salts of tin, including tin(II) chloride (SnCl₂), tin(IV) chloride (SnCl₄), tin(II) sulphate (SnSO₄), and tin(II) nitrate (Sn(NO₃)₂). The target nuclide material may further instead be selected from organometallic compounds of tin, including tetraphenyl tin, tin(IV)-phthalocyanine oxide, tin(II)-phthalocyanine, and tin(II)-2,3-naphthalocyanine.

The carbon-based recoil capture material may be selected from amorphous carbon, carbon allotropes, and mixtures thereof. More particularly, the recoil capture material may be selected from isotropic amorphous carbon; carbon allotropes such as graphite, graphene, carbon nanofoam, carbon black, charcoal, activated carbon and glassy carbon; or mixtures thereof. Isotropic amorphous carbon and carbon allotropes, such as those identified above, are characterized thereby that they do not have, at crystallographic level, so-called empty cage structures which are readily deformed by radiation when exposed to neutron irradiation.

The target nuclide material and the recoil capture material may both be in finely divided particulate form, each typically having a mean particle size of at most about 50 nm. Desirably, the target nuclide material may have a mean particle size as small as can be obtained, generally being in the order of about 50 nm to about 10 µm.

When both the target nuclide material and the recoil capture material are in particulate from as described above, the method may include mixing the target nuclide material and the recoil capture material. It will be appreciated that, in such an embodiment, the recoil capture material will also be present in the irradiation zone while the neutron irradiation occurs, with the target medium thus comprising both target nuclide material and recoil capture material. It is expected that the ratio in which the target nuclide material and recoil capture material will, in such a case, be mixed, may be determined by routine experimentation and optimization. Conveniently, however, the target nuclide material and recoil capture material may be mixed in a 1:1 ratio, by weight.

Irradiating the target medium may include placing the target medium in the path of a neutron flux from a neutron source. In one embodiment of the invention, the neutron source may be nuclear fission products of a nuclear fission reaction taking place inside a nuclear reactor. The method may then include placing the target medium in a position relative to the nuclear reactor where the neutron flux from the nuclear fission products is sufficiently high and has kinetic energy within a range that is compatible with the desired reaction with the target nuclide material. Alternatively, the neutron source may be an accelerator-based neutron source. An example of such a source is the Spallation Neutron Source (SNS) at Oak Ridge National Laboratory, Oak Ridge, Tennessee, USA.

The method may include recovering the captured radionuclides from the recoil capture material.

Preferably, recovering the captured radionuclides from the recoil capture material includes treating the recoil capture material with a dilute and/or a concentrated acidic extraction solvent, thereby to form a recoil capture material suspension, and chemically extracting or leaching captured radionuclides from the recoil capture material, to obtain a radionuclide-enriched extraction solvent. Thus, it is envisaged that the recoil capture material may be treated either with a dilute acid or with a concentrated acid or, alternatively, with both a dilute and a concentrated acid, separately from each other, e.g. in the form of a two-step treatment.

Particularly when the extraction solvent is a dilute acid, recovery of the captured radionuclides from the recoil capture material may include eluting the captured radionuclides from the recoil capture material by dissolution of the captured radionuclides in the dilute acid. The acid may be selected from hydrochloric acid and ascorbic acid. The acid may also be selected from other mineral or organic acids, including nitric acid, sulfuric acid, fluorosulfuric acid, phosphoric acid, citric acid, oxalic acid, acetic acid, and Meldrum's acid. It will be appreciated that the acid may also comprise a combination of any two or more of the abovementioned acids. Preferably, the acid may be diluted to a concentration of the order of 0.01 mol dm⁻³ to 10mol dm⁻³, typically about 0.5mol dm⁻³.

The method may include incubating the recoil capture material suspension for a prolonged period, preferably not exceeding the half-life of the product radionuclide. It is expected that such incubation of the recoil capture material would allow for more optimal recovery of the captured radionuclides from the recoil capture material to the elutrate or leachate. By "more optimal recovery" there is meant the procurement of a desired yield of captured radionuclides as measured in terms of its gamma activity and converted into an enrichment factor relative to total tin content in the elutrate. Alternatively, the method may include increasing the rate of elution by selecting appropriate reaction conditions, such as temperature, acidity and acid strength, and/or by using ultrasonic treatment to facilitate dislodgement of the captured radionuclides into the surrounding suspension. It is expected that such reaction conditions would be determinable by routine experimentation.

The method may also include maintaining the pH of the recoil capture material suspension sufficiently low to avoid untimely hydrolysis of the extracted radionuclide atoms. Maintaining the pH may include selectively adding dilute acid solutions to the suspension.

When the extraction solvent comprises a concentrated acid, the acid may typically be a more corrosive acid than those indicated above. The method may then include dissolving or stripping the recoil capture material in such acids. Such more corrosive acids may include aqua regia, which is a 1:3 volumetric mixture of concentrated nitric acid and hydrochloric acid, chromic acid, hydrofluoric acid, or combinations of these acids.

The method may further include, when recovering radionuclides from the recoil capture material by treating the recoil capture material with an acidic extraction solvent, recovering or separating radionuclide-enriched extraction solvent from the recoil capture material by means of centrifugation, vortex separation and/or filtration.

Alternatively, recovering the captured radionuclides from the recoil capture material may include treating the recoil capture material with an alkaline extraction solvent. Preferably, the alkali may be sodium hydroxide. In such a case, the radionuclides may typically be extracted in the form of radionuclide metal hydroxides. The method may then include recovering or separating recovered radionuclide metal hydroxides from the recoil capture material, typically by means of centrifuge, vortex separation and/or filtration.

Instead, recovering the captured radionuclides from the recoil capture material may include combusting the recoil capture material in oxygen.

It will be appreciated that, when the target medium comprises a mixture of recoil capture material and target nuclide material, as hereinbefore described, at least some target nuclide material may also be present when recovering captured radionuclides from the recoil capture material in the fashion hereinbefore described, e.g. in the recoil capture material suspension. Therefore, the method may include, if desired, separating the recoil capture material from the target nuclide material before recovering radionuclides from the recoil capture material. Such separation may be achieved by means of a liquid-liquid extraction process, typically using an organic liquid and an aqueous liquid as liquid-liquid extraction solvents. Preferably, the organic liquid is selected from tetrabromoethane (TBE) and toluene. The aqueous liquid will, typically, be water. At least some of the target nuclide material contained in the recoil capture material suspension may typically be recovered to the aqueous phase. The method may further include immobilizing the target nuclide material-containing aqueous phase in order to separate it from the RCM-containing organic phase. Typically, immobilization of the aqueous phase may be achieved by addition of any suitable natural clay or synthetic crack filler to the recoil capture material suspension, thereby to absorb the aqueous phase. The clay may be selected from clays having a high water absorbing capacity which swell extensively when exposed to water. It is expected that such clays will fill, i.e. immobilize, the aqueous phase before the target nuclide material can settle out. Preferably, the clay may be selected from montmorillonite clays, such as bentonite clays, Ca-bentonite clays, attapulgite, MD-Bentonite and Eccabond-N / Bentonite.

The invention extends to radionuclides when produced by the method of the invention.

According to another aspect of the invention, there is provided a radionuclide production arrangement, which includes
an irradiation zone, in which a target medium comprising at least a target nuclide material is provided;
a neutron irradiation source, which is provided in a neutron irradiation relationship with the target medium in the irradiation zone; and
a carbon-based recoil capture material, arranged to capture radionuclides which are ejected from the target nuclide material, the carbon-based recoil capture material not having an empty cage structure at crystallographic level.

The target nuclide material and the recoil capture material may be as hereinbefore described. The neutron irradiation source may also be as hereinbefore described.

The invention will now be described in more detail with reference to the following non-limiting examples.

In the examples, tin (Sn) has been selected as the metal for the target nuclide material, particularly because of its preference in the treatment of certain cancers and because activated metastable (m) tin-117 (^{117m}Sn) can be easily detected due to its ideal 160keV gamma emission using conventional gamma detectors. Thus, in the case of tin, high specific activity ^{117m}Sn is produced by neutron irradiation of a target medium containing tin-116 (¹¹⁶Sn) according to the following (n, γ) nuclear reaction:

¹¹⁶Sn (n,γ) ¹¹⁷Sn (1)

whereby the resulting radioactive ^{117m}Sn nuclei gain high recoil energy from the γ-emission and the ^{117m}Sn atoms are thus ejected or recoiled from the original lattice of the target nuclide material.

All reagents were of analytical grade and were obtained from Merck KGaA, Darmstadt, Germany and from Sigma-Aldrich Chemie GmbH, Steinheim, Germany.

### EXAMPLE 1:

The target medium was selected from combinations of >99 % pure SnO, in powder form having a mean particle size of 10 micron powder and SnO₂ in nano-powder form, as target nuclide material, and >99 % pure carbon in nano-powder form or graphite powder, as recoil capture material.

Solutions of ascorbic acid and hydrochloric acid (HCl) were each prepared at a concentration of 0.50 mol dm⁻³ for extracting recoiled ^{117m}Sn atoms from the carbon or graphite recoil capture material, after irradiation, i.e. after the ¹¹⁶Sn (n, γ) ^{117m}Sn reaction (1).

Target media were prepared as indicated in Table 1, comprising combinations of 50 mg (0.37 mmol) SnO, or 50mg (0.33 mmol) SnO₂, admixed with 50 mg of carbon nano-powder or graphite powder as recoil capture material.

The prepared target media were then sealed in polyethylene capsules. Two targets of each combination of target nuclide material and recoil capture material were prepared: one to be extracted using the 0.50 mol dm⁻³ HCl solution, and the second to be extracted with the 0.50 mol dm⁻³ ascorbic acid solution.

The target media were prepared for irradiation at the nuclear reactor of the Reactor Institute of the Delft University of Technology, Delft, Netherlands (TU Delft). The target media were then irradiated for a period of 10 hours and left to cool over a five day period in order to allow the samples to cool down or decay to lower radiation levels for safer handling and to reduce false counts from short-lived contaminants.

The recoiled ^{117m}Sn radionuclides were extracted from the carbon or graphite media with the pre-prepared HCl and ascorbic acid solutions. A volume of 10 ml each of the respective acid solutions was added respectively to the irradiated target media, including the polyethylene capsule, which was opened, thereby to form respective suspensions of the target media, comprising the target nuclide material and the capture media, in the acid solutions. A 2 ml sample of each suspension was immediately taken to assay the total target yield or background of dissolved un-irradiated oxides as reference for the enrichment factor, whereafter the volume was topped up with 2 ml of the corresponding acid solution and left to incubate at room temperature, respectively for periods of 0.25 hour, 0.5 hour, 1 hour, 5 hours, 48 hours, and 7 days.

At the respective time intervals as indicated in Table 1 below, 2 ml samples of the suspensions were extracted by filtering through a 0.22 µm filter. The ^{117m}Sn ions that had been dissolved or leached from the recoil capture material into the acidic solutions were maintained in solution as described hereinbefore and were collected in the filtrate, with the un-reacted, or non-recoiled, stable tin-oxide target nuclide material and the recoil capture material essentially remaining behind in the filter, to be flushed back into the capsule with the 2 ml top-up solution for further leaching. Thus, the filtrate contains a concentrate of the radioactive ^{117m}Sn radionuclides enriched relative to any dissolved un-reacted tin oxide. Samples taken after the 7-day incubation period, as identified in Table 1 below, were taken after having placed the recoil capture material suspensions in an ultrasonic bath for 1 hour. Up to the 60 minute sample the suspensions were topped up again to maintain a fixed volume of 10 ml, and were vortex mixed at 15 minute intervals.

In a separate set of tests, target media were prepared in triplicate to reproduce the results obtained by ultrasonic treatment. These were incubated for 48 hours at which time samples were taken before and after ultrasound exposure of 1 hour. A second set of samples were taken on day 7 of the trial. The ^{117m}Sn activity within the 2 ml samples were then determined by γ-spectroscopy and calculated back to end of bombardment (EOB). These were analyzed at the Instrumental Neutron Activation Analysis (INAA) facility at the Department of Radiation, Radionuclides & Reactors, Faculty of Applied Sciences, Delft University of Technology. For the determination of the specific activity and enrichment factors, the total tin concentration was measured by Inductively Coupled Plasma-Optical Emission Spectroscopy (ICP-OES) at the appropriate tin wavelength of 189.926 nm.

The method of this embodiment of the invention successfully concentrated ^{117m}Sn radionuclides in both the graphite as well as the amorphous carbon recoil capture media, achieving for SnO₂ an enrichment factor of 34 (as indicated in Table 1), with a specific activity and yield of 2.53 MBq mmol⁻¹ and 0.07 %, respectively, in 0.50 mol dm⁻³ HCl solution. On the other hand, SnO yielded lower specific activities, probably due to the relative ease of dissolution of the unirradiated target SnO in the acidic medium used.

Acidic solutions were used to maintain low pH conditions for the extraction of the radionuclides from the recoil capture medium, minimizing the chance of hydrolysis of the recoil tin ions and their eventual precipitation, especially for SnO₂ (i.e. Sn⁴⁺), which would make the recoiled tin and target tin oxide(s) virtually inseparable by filtration. Both the ascorbic acid and HCl are strong reducing agents and minimize the oxidation of the dissolved ^{117m}Sn, which could similarly lead to hydrolysis. Ascorbic acid, being a weak acid (pH 2), is less reactive than HCl (pH 0.4). This was considered as being beneficial for achieving higher specific activity, since the stronger HCl also readily dissolves the un-irradiated target oxides, an effect which is even more prominent for SnO, which was about 1000 times more soluble than SnO₂ in HCl (Table 1 compared to Table 2).

In Table 1, the results of the analysed samples are given for extraction with HCl, while Table 2 below displays the same for extraction with ascorbic acid. For the SnO₂ the amount of dissolved tin was generally constant up to about 3 days of incubation. However, SnO was more labile and exhibited a moderate increase in dissolved tin with time. Being an organic acid, the ascorbic acid has an advantage as it allows the carbon or graphite particles to suspend or disperse in solution due to a moderate apolar, hydrophobic effect, thus, allowing for a larger surface area for contact with the acid to effectively extract the recoiled activity. Furthermore, ascorbic acid is reported to act as a complexing agent, which could then bind the extracted ^{117m}Sn ions and keep them in solution, in so doing minimizing the hydrolysis of tin and allowing for separation by filtration.

Additional control experiments were carried out (Table 3) in which the extraction procedure was repeated using un-irradiated (cold) SnO₂ and SnO, for HCl and ascorbic acid, to determine the extent to which the acids dissolve the oxides - the dissolved tin content was measured by ICP-OES. These tests served to verify the reactivity of the tin oxides with the respective acids.

The effectiveness and success of the extractions was monitored by the enrichment factors achieved at each step in the process. This was calculated as the ratio of the ^{117m}Sn specific activity of the samples (at each time point) and the initial total target yield. The initial total target yields were 0.11 ± 0.02 MBq mmol⁻¹ and 0.10 ± 0.02 MBq mmol⁻¹ for SnO₂ and SnO, respectively. Tables 1 and 2 show the trend in the specific activity (MBq mmol⁻¹) achieved at the selected intervals (15, 30 and 60 minutes, 5 and 48 hours), as calculated as the ratio of the measured ^{117m}Sn activity (MBq ml⁻¹) - as determined by γ-spectroscopy - and the tin concentration (mmol dm⁻³) - as measured by ICP-OES. Following the irradiation the ^{117m}Sn was dissolved to yield enrichment factors between 2 and 34.

Generally speaking, both solutions, HCl and ascorbic acid, were effective in extracting the ^{117m}Sn. However, the more reactive tin oxide, SnO, and the stronger acid solution, HCl, respectively, seem to produce higher yields, albeit their specific activities and enrichment factors are lower. As a result SnO₂ performed better, while extraction with ascorbic acid proved futile, as observed by the undetectable ^{117m}Sn activity in Table 2. An enrichment factor of 34 and 0.07% yield was achieved in the presence of carbon - after treatment with 0.50 mol dm⁻³ HCl (Table 1).

Ultrasonic treatment for 1 hour, after 48 hours and 7 days incubation respectively, had no significant effect on the specific activity, and hence the enrichment factor remained substantially unchanged. As a control, other isotopes were also monitored during this study, namely ¹¹³Sn, ^{113m}Sn, ¹²⁵Sn and ^{121m}Sn, and their enrichment factors were similar to that of ^{117m}Sn. This was to be expected, as they are produced by the same (n, γ) reaction, and especially since the energies of their prompt γ-rays are similar.

It is foreseen that the best extraction medium could possibly be a combination of ascorbic acid and HCl, since HCl is better at dissolving the recoil activity, whilst ascorbic acid allows for greater surface area with the recoil capture material whilst simultaneously complexing the ^{117m}Sn, keeping it in solution and preventing unwanted hydrolysis and precipitation. Further optimization will be required of the combination and the ideal concentration of each, e.g. by a speciation study using glass electrode potentiometry. Obviously, longer irradiation times will also increase the yields and/or enrichment factors.

### EXAMPLE 2:

In another example of the invention, the option to separate and isolate the recoil capture material from the oxides prior to extraction with acid is investigated. The purpose of this is to minimize the presence of "cold" (un-irradiated) tin, which could lower the specific activity and also avoid any irradiated but un-recoiled [^{117m}Sn]SnO or [^{117m}Sn]SnO₂ from being taken up into the acid extract/filtrate, which could produce false positives. One such method involves an initial organic/aqueous liquid-liquid extraction in which the post-irradiated material is added to water and tetrabromoethane (TBE) or toluene, respectively. The choice of the organic solvent depends on the preferred orientation of the organic and aqueous phases.

In the separation using TBE and water (first column under each oxide, Table 4), the tin-oxides remain suspended in the top aqueous layer whilst the carbon or graphite is distributed in the organic layer below. The carbon and graphite does not dissolve in the solvents *per se,* but separation is achieved due to differences in polarity of the recoil capture media and the tin oxides. The ^{117m}Sn activity distribution of the organic and aqueous phases, as well the utensils (i.e. glassware and syringes), were measured in a Capintec ionization chamber and yield the results as seen in Table 4. Although meticulous handling was required, fairly good separation was achieved. However, the oxides eventually settled at the aqueous-organic interface, i.e. at the bottom of the aqueous layer on top, which in the event of overshooting during the separation of the phases, became extracted with the TBE phase instead, as seen in the TBE columns of Table 4.

When toluene is used instead of TBE, the organic and aqueous phases are inverted, i.e. the toluene layer is on top. In so doing the settling of the tin-oxide at the bottom of the (bottom) aqueous layer, away from the organic phase, makes the extraction more efficient (Toluene column under each oxide, Table 4), effectively minimizing the chance of collecting the oxide with the graphite or carbon. The separation was good and required less handling. Furthermore, there was a lower risk of having the tin oxide present in the organic phase. However, a thin film of toluene had developed around the surface of the water component, which contained some graphite, and was not easily separated.

In the tests under this example the recoil activity was not extracted from the recoil capture media, while it merely served as a demonstration of the feasibility of these steps. Water was used in the extractions and not acid or buffer solution so as to avoid premature extraction of the recoil ^{117m}Sn ions from the recoil capture media, which then could end up in the aqueous phase. Although the inventors have found the liquid-liquid extraction method to be cumbersome and sensitive to overshooting, refinement of the steps may prove it to be a valid process step.

Furthermore, although yields are not significant (2.2% and 2.6% respectively), the objective would be purely to achieve a higher ratio of radioactivity (Bq or Ci) per mass or volume of the product nuclide. The yields can eventually be improved by further experimentation and optimization.

### EXAMPLE 3:

In a further example, the phase separation option outlined in Example 2 is extended to include the immobilization with clay of the aqueous phase containing the oxide to allow for the organic layer to be decanted or washed away for further processing and extraction of the recoil ^{117m}Sn.

In these experiments 5 clays and a conventional household crack filler was considered as solidifying/immobilizing agent, namely: (1) Bentonite-MD / 0104 / Environment; (2) Ca-Bentonite / Calcium 100# / 0106 / 1-06-10-12-03; (3) Attapulgite; (4) MD-Bentonite / 0101; (5) Eccabond-N / Bentonite; and (6) Alcolin interior crack filler (Polyfilla), all obtained from Koppies in the Orange Free State, South Africa (G & W Base & Industrial Minerals, Germiston, 1428, Gauteng, South Africa,), and the household crack filler (Polyfilla) obtainable from any local hardware store. These were in turn carefully added to the two extraction mixtures of Example 2 until the aqueous phase was saturated with the respective clay. Approximately 1 g of clay was needed per ml of water. All the clays including the crack filler did not disperse in the organic layers; in the case of toluene they descended straight through unimpeded to eventually react with the water below it. As for TBE, the clays remained dispersed in the upper aqueous layer, with no intrusion into the organic phase. Clays 1, 4 and 5 performed similar throughout, reacting slowly with the water and without settling out in the aqueous layer. Instead, these clays reacted close to the water surface or meniscus. This resulted in some of the unreacted water being trapped below the clay - out of reach of the fresh clay being added. Clays 2 and 3 reacted slower, however they did eventually settle out in the water layer and allowed for good contact and reaction with all the water. The same was observed for the crack filler. Agitating the mixture slightly promoted the settling of the crack filler. Eventually, all the clays swelled up, but not the crack filler. Clays 2 and 3 exhibited the most favourable behaviour and were also the best for use with toluene. The crack filler too behaved well, especially with TBE. However, in the case of the clays, the toluene should be decanted within 15 minutes after introducing the clay, whereas with the crack filler - with either the toluene or TBE - should be allowed to set overnight prior to separation, and even then its hardening is only moderate. In all cases with toluene the clays and crack filler trapped some carbon as it descended through the toluene. To promote sufficient hardening of the crack filler, Na₂SO₄ was added to it in a 1:1 mass ratio and in so doing the Na₂SO₄ absorbs any excess water so as to facilitate drying and hardening of the crack filler. However, only a slight improvement was achieved.

The inverse approach is also possible, that is, the immobilization or solidification / encapsulation of the recoil capture media using molten paraffin wax, which would replace the organic solvent. However, this would require operating at elevated temperatures so as to avoid inappropriate hardening of the wax.

An alternative means of separation could be by dry density separation of the powders in a shaking device.

It is envisaged that once the recoil capture material can be successfully separated from the oxides the recoil activity can be isolated or extracted by means of acid leaching, as above, or by combustion of the carbon-based material in oxygen to yield [^{117m}Sn]SnO₂ or [^{117m}Sn]SnO and carbon-dioxide gas.

It is believed that the specific methods employed in Examples 1 - 3 provide a preferred route from a production perspective, as the forms of the target nuclide materials used were resilient and favourable for both harsh radiation conditions and simplicity of post irradiation work-up and isolation.

Radiolabelled tin II and IV, i.e. [^{117m}Sn]-Sn(II) and [^{117m}Sn]-Sn(IV), have been proposed as constituents of prospective radiopharmaceuticals for the palliation of bone pain by RNT. The radionuclide ^{117m}Sn emits conversion electrons upon decay and has been reported to have a short range of about 0.2mm to 0.3mm in tissue, which renders ^{117m}Sn ideal for treatment of bone cancer, as the exposure of sensitive bone marrow to radiation, and hence the radiotoxicity of ^{117m}Sn, is limited. Its attractiveness as a radiopharmaceutical is further enhanced by the 159 keV gamma that is emitted in about 86% of decay events, which makes it also an excellent diagnostic imaging radionuclide, e.g. in applications of tumour location.

As illustrated by the examples above, when tin is selected as the preferred target nuclide, the oxides SnO and SnO₂ are preferred molecular forms of the target nuclide material. The Applicant has found that the oxides of tin are more resistant to radiation damage during extended irradiation times than other compounds of tin. The Applicant has further found that these oxides of tin are generally chemically inert to extraction solvents used in recovering the captured radionuclides post-irradiation. These oxides of tin are also thermally stable with melting points of 1080 ºC and 1127 ºC respectively, which is particularly advantageous in the reaction conditions to which the oxides are exposed.

Similarly to SnO and SnO₂, as target nuclide materials, the Applicant has also found that carbon and graphite, as recoil capture materials, are able to endure harsh chemical treatment and are inert in dilute acid. The Applicant has found that recoiled ^{117m}Sn atoms/ions are bound loosely to moderately stably to the recoil capture material. This feature, combined with the robustness of carbon and graphite to harsh chemical treatment and inertness in dilute acid, allows for the atoms/ions to be eluted or leached from the recoil capture material by dissolution of the RCM in a dilute acid. Carbon and graphite, as recoil capture materials, are also robust to exposure to larger neutron fluxes and exposure periods, as opposed to C₆₀ fullerenes which can be damaged by epithermal neutrons within 2 hours of irradiation in an unfiltered neutron flux of 10¹⁴ cm⁻²s⁻¹. Graphite is an allotrope of carbon, in which the carbon atoms are covalently bound in flat sheets of fused hexagonal rings. The sheets are loosely stacked and held together by weak Van der Waals forces. Conversely, carbon is amorphous and, unlike graphite, is devoid of a crystalline arrangement of atoms. The inventors do not wish to be bound by theory, but it is expected that the recoiled ^{117m}Sn atoms/ions become intercalated within the carbon or graphite lattice, from which they can later be extracted by chemical and/or physical means, for example, by burning of the carbon RCM in oxygen to liberate the enriched [^{117m}Sn]tin-oxide with the release of CO₂ gas.

The Applicant is aware that commercially employed techniques for producing radionuclides known at the time of filing of this application yield ^{117m}Sn radionuclides with reported specific activities as high as 25 Ci g⁻¹ (∼88 MBq mmol⁻¹) at end of bombardment (EOB) and are obtainable from suppliers such as Curative Technologies Corporation (CTC). Specific activity of this magnitude can be achieved for example by inelastic neutron scattering irradiation of tin metal enriched to 92 % in ¹¹⁷Sn for about 35 days in the high flux SM-3 reactor at the Reactor Institute of Atomic Reactors (RIAR), in Dimitrovgrad, Russia, i.e. by the ¹¹⁷Sn (n, n*'*) ^{117m}Sn reaction. Alternatively, ^{117m}Sn can be produced by epithermal neutron irradiation by the hereinbefore described (n, γ) neutron capture reaction, ¹¹⁶Sn (n, γ) ^{117m}Sn, but the reaction rate in terms of neutron capture cross section for this reaction (0.14 barns) is generally considered to be too low to produce ^{117m}Sn with high specific activity cost effectively by conventional methods.

In the abovementioned (n, γ) reactions, however, the resulting nucleus acquires a recoil kinetic energy, as a result of the prompt γ-ray emission upon neutron capture, which is significantly greater than the activation energy achieved by normal thermal reactions (chemical bond energies are typically in the range of 1 - 5 eV, and the recoil energies acquired by the nucleus due to the recoil is generally well in excess of 10 MeV), while at the same time the atom is chemically transformed, such that the chemical bonding or valence of the recoiled atom is reduced to a lower state, as also described hereinbefore. This allows for chemical extraction based on bonding differentiation. Further, by applying the phenomenon of "recoil implosion", whereby the recoil radioactive atom is implanted or captured inside an empty fullerene (C₆₀ or C₈₀) cage, carrier-free radio-chemicals can be prepared, for example metallofullerenes such as ¹⁷⁷Lu@C₆₀ and ¹⁵³Sm@C₈₀, where the lutetium-177 (¹⁷⁷Lu) and samarium-153 (¹⁵³Sm) become entrapped within C₆₀- and C₈₀-fullerene cages, respectively. The foregoing is a typical example of a process based on the Szilard-Chalmers principle.

Although fullerenes, and for the same reason buckyballs, as empty cage structures are ideal as RCM in the art of the invention, the shortcoming of this route is that such carbon structures are only capable of withstanding the irradiation in a reactor flux of pure thermal neutrons, but are deformed by radiation damage within 2 hours of exposure to epithermal neutrons.

In the present invention the use of carbon-based materials such as amorphous carbon and graphite, with no "empty cage" structure, are proposed as recoil capture media to capture the ^{117m}Sn recoil atoms from the (n, y)-reaction with ¹¹⁶Sn, as these carbon-based matrixes are less prone to radiation damage. Thus, the problem of achieving high specific activity recoil ^{117m}Sn at relatively low cost and with minimal waste material is specifically addressed.

**Table 1: Total tin concentration per extraction sample as measured by ICP OES, the specific activity of ^{117m}Sn for each and the extraction yield, at various incubation times in 0.50 mol dm⁻³ HCl, for targets containing natural SnO₂ and SnO**

| **Target medium** | **Time (hours)** | **^{117m}Sn Activity (Bq ml⁻¹)** | **Dissolved Sn (µmol dm⁻³)** | **Spec. Activity (MBq mmol⁻¹)** | **Enrichment Factor** | **Yield (%)** |
|---|---|---|---|---|---|---|
| **SnO₂/ Carbon** | **0.25** | 6.73 | 5.11 | 1.32 | 18 | 0.05 |
| | **0.5** | 6.49 | 4.26 | 1.53 | 21 | 0.05 |
| | **1** | 8.6 | 3.40 | 2.53 | 34 | 0.07 |
| | **5** | 11.7 | 5.11 | 2.29 | 31 | 0.09 |
| | **48** | 11.8 ± 0.9 | 6.2 ± 1.3 | 1.9 ± 0.4 | 17.5 ± 3.9 | 0.061 ± 0.002 |
| | **7 days** | 7.4 ± 0.7 | 4.5±1.3 | 1.7±0.3 | 15.6 ± 4.5 | 0.038 ± 0.004 |
| **SnO₂ / Graphite** | **0.25** | 10.9 | 5.96 | 1.83 | 22 | 0.08 |
| | **0.5** | 13.5 | 6.81 | 1.98 | 23 | 0.09 |
| | **1** | 14.7 | 7.66 | 1.92 | 23 | 0.1 |
| | **5** | 17.4 | 7.66 | 2.27 | 27 | 0.12 |
| | **48** | 16.0 ± 2.8 | 9.1 ± 1.0 | 1.8 ± 0.3 | 16.5 ± 1.7 | 0.09 ± 0.01 |
| | **7 days** | 9.1 ± 2.3 | 4.5 ± 1.0 | 2.1 ± 0.8 | 20 ± 7 | 0.05 ± 0.01 |
| **SnO** / **Carbon** | **0.25** | 3410 | 20800 | 0.16 | 2 | 19.55 |
| | **0.5** | 2500 | 17400 | 0.14 | 2 | 14.41 |
| | **1** | 2070 | 14500 | 0.14 | 2 | 11.93 |
| | **5** | 1650 | 11350 | 0.15 | 2 | 9.51 |
| | **48** | 3280 ± 250 | 10100 ± 900 | 0.33 ± 0.05 | 3.1 ± 0.4 | 15.6 ± 0.3 |
| | **7 days** | 380 ± 150 | 3300 ± 1400 | 0.12 ± 0.02 | 1.11 ± 0.19 | 1.9 ± 0.9 |
| **SnO** / **Graphite** | **0.25** | 3260 | 19400 | 0.17 | 2 | 21.95 |
| | **0.5** | 3010 | 17800 | 0.17 | 2 | 20.27 |
| | **1** | 2510 | 15300 | 0.16 | 2 | 16.9 |
| | **5** | 2140 | 13000 | 0.17 | 2 | 14.41 |
| | **48** | 3870 ± 470 | 8400 ± 2800 | 0.50 ± 0.16 | 4.5 ± 1.8 | 16.5 ± 0.3 |
| | **7 days** | 2900 ± 350 | 20500 ± 1300 | 0.14 ± 0.02 | 1.24 ± 0.09 | 12.4 ± 0.3 |

**Table 2: Total tin concentration per extraction sample as measured by ICP OES, the specific activity of ^{117m}Sn for each, and the extraction yield, at various incubation times in 0.50 mol dm⁻³ ascorbic acid solution, for targets containing natural SnO₂ and SnO. (Where the γ-spectroscopy results were below the detection limit (1.8 Bq per gram of sample), the specific activities and enrichment factors could not be calculated, as represented by the dash (-) in the table.)**

| | **Time (hours)** | **^{117m}Sn Activity (Bq ml⁻¹)** | **Dissolved Sn (µmol dm⁻³)** | **Spec. Activity (MBq mmol⁻¹)** | **Enrichment Factor** | **Yield (%)** |
|---|---|---|---|---|---|---|
| **SnO₂ / Carbon** | **0.25** | < 1.8 | 1.85 | - | - | - |
| | **0.5** | < 1.8 | 1.58 | - | - | - |
| | **1** | < 1.8 | 1.48 | - | - | - |
| | **5** | < 1.8 | 1.21 | - | - | - |
| | **48** | 3.7 ± 1.3 | 3.1 ± 0.3 | 1.2 ± 0.6 | 11 ± 7 | 0.019 ± 0.010 |
| | **7 days** | 3.0 ± 0.7 | 2.4 ± 0.4 | 1.14 ± 0.10 | 10 ± 4 | 0.015 ± 0.008 |
| **SnO₂ / Graphite** | **0.25** | < 1.8 | 1.58 | - | - | - |
| | **0.5** | < 1.8 | 1.67 | - | - | - |
| | **1** | < 1.8 | 1.67 | - | - | - |
| | **5** | < 1.8 | 1.39 | - | - | - |
| | **48** | 3.9 ± 0.7 | 3.1 ± 0.5 | 1.27 ± 0.14 | 14 ± 4 | 0.03 ± 0.01 |
| | **7 days** | 4.1 ± 1.9 | 2.72 ± 0.14 | 1.54 ± 0.20 | 22.2 ± 0.8 | 0.035 ± 0.030 |
| **SnO** / **Carbon** | **0.25** | < 1.8 | 5.38 | - | - | - |
| | **0.5** | < 1.8 | 6.30 | - | - | - |
| | **1** | < 1.8 | 7.88 | - | - | - |
| | **5** | 4.82 | 32.4 | 0.15 | 5 | 0.09 |
| | **48** | 580 ± 80 | 5400 ± 900 | 0.108 ± 0.008 | 0.99 ± 0.21 | 2.6 ± 0.3 |
| | **7 days** | 2170 ± 190 | 20000 ± 900 | 0.108 ± 0.005 | 1.00 ± 0.21 | 9.7 ± 2.5 |
| **SnO** / **Graphite** | **0.25** | 1.82 | 27.6 | 0.066 | 1 | 0.02 |
| | **0.5** | 2.19 | 21.0 | 0.11 | 2 | 0.02 |
| | **1** | 2.83 | 21.7 | 0.13 | 3 | 0.03 |
| | **5** | 3.08 | 23.6 | 0.13 | 3 | 0.03 |
| | **48** | 530 ± 400 | 2900 ± 500 | 0.17 ± 0.11 | 1.9 ± 1.2 | 2.3 ± 1.2 |
| | **7 days** | 1770 ± 90 | 17400 ± 700 | 0.102 ± 0.003 | 1.19 ± 0.28 | 9 ± 3 |

**Table 3: Dissolution of SnO₂ and SnO in 0.50 mol dm⁻³ HCl or 0.50 mol dm⁻³ ascorbic acid solutions up to 3 days at ambient temperature**

| **Tin Oxide** | **Solution (0.50 mol dm⁻³)** | **Time (hours)** | **Dissolved Sn (µmol dm⁻³)** |
|---|---|---|---|
| **SnO₂** | **HCl** | **0.25** | 3.40 |
| | | **0.5** | 2.55 |
| | | **1** | 4.25 |
| | | **5** | 6.81 |
| | | **48** | 7.66 |
| | | **3 days** | 16.2 |
| | | | |
| **SnO₂** | **Ascorbic Acid** | **0.25** | 2.69 |
| | | **0.5** | 2.50 |
| | | **1** | 2.32 |
| | | **5** | 2.32 |
| | | **48** | 2.13 |
| | | **3 days** | 2.32 |
| | | | |
| **SnO** | **HCl** | **0.25** | 8380 |
| | | **0.5** | 21010 |
| | | **1** | 20700 |
| | | **5** | 18780 |
| | | **48** | 17230 |
| | | **3 days** | 11060 |
| | | | |
| **SnO** | **Ascorbic Acid** | **0.25** | 6.02 |
| | | **0.5** | 9.45 |
| | | **1** | 13.2 |
| | | **5** | 17.5 |
| | | **48** | 19.3 |
| | | **3 days** | 21.3 |

**Table 4: Percentages (%) of ^{117m}Sn activity present in organic and aqueous phases, following liquid-liquid extraction technique for separation of tin oxides from the carbon-based recoil capture media, carbon or graphite**

| **Liquid Phase** | **SnO** | | **SnO₂** | |
|---|---|---|---|---|
| | TBE | Toluene | TBE | Toluene |
| Aqueous | 34.1 | 97.8 | 22.9 | 93.9 |
| Solvent | 57.6 | 2.2 | 50.6 | 2.6 |
| **Glassware** | 8.2 | | 26.5 | 3.5 |

## Claims

1. A method of producing radionuclides, which includes
in an irradiation zone, irradiating a target medium comprising at least a target nuclide material, with neutron irradiation, thereby causing radionuclides to form in the target nuclide material, with at least some of the formed radionuclides being ejected from the target nuclide material; and
capturing and collecting the ejected radionuclides in a carbon-based recoil capture material which does not have an empty cage structure at crystallographic level.

2. The method according to Claim 1, wherein the target nuclide material is selected from the group consisting of a pure metal and a metal compound.

3. The method according to Claim 2, wherein the metal of the target nuclide material is selected from the group of metal elements in the Periodic Table of Elements extending from scandium, of atomic number 21, to bismuth, of atomic number 83, both elements included, with the non-metal elements arsenic, selenium, bromine, krypton, tellurium, iodine and xenon thus being excluded.

4. The method according to Claim 3, wherein the metal of the target nuclide material is tin.

5. The method according to any one of Claims 1 to 4 inclusive, wherein the recoil capture material is selected from amorphous carbon, carbon allotropes, and mixtures thereof.

6. The method according to any one of Claims 1 to 5 inclusive, wherein the target nuclide material and the recoil capture material are both in finely divided particulate form, each having a mean particle size of at most about 50 nm.

7. The method according to Claim 6, which includes mixing the target nuclide material and the recoil capture material, with the target medium thus comprising both target nuclide material and recoil capture material.

8. The method according to any one of Claims 1 to 7 inclusive, wherein irradiating the target medium includes placing the target medium in the path of a neutron flux from a neutron source.

9. The method according to any one of claims 1 to 8 inclusive, which includes recovering the captured radionuclides from the recoil capture material by treating the recoil capture material with a dilute and/or a concentrated acidic extraction solvent, thereby to form a recoil capture material suspension, and chemically extracting or leaching captured radionuclides from the recoil capture material, to obtain a radionuclide-enriched extraction solvent.

10. The method according to Claim 9, which includes incubating the recoil capture material suspension for a period which does not exceed the half-life of the captured radionuclides.

11. The method according to Claim 9 or Claim 10, which includes recovering or separating radionuclide-enriched extraction solvent from the recoil capture material by means of centrifugation, vortex separation and/or filtration.

12. The method according to any of claims 1 to 8 inclusive, which includes recovering the captured radionuclides from the recoil capture material by treating the recoil capture material with an alkaline extraction solvent.

13. The method according to any of claims 1 to 8 inclusive, which includes recovering the captured radionuclides from the recoil capture material by combusting the recoil capture material in oxygen.

14. The method according to any of claims 9 to 13 inclusive, which includes, when the target medium comprises a mixture of the recoil capture material and the target nuclide material, separating the recoil capture material from the target nuclide material before recovering radionuclides from the recoil capture material.

15. The method according to Claim 14, wherein separating the recoil capture material from the target nuclide material is achieved by means of liquid-liquid extraction, using an aqueous liquid and an organic liquid as liquid-liquid extraction solvents.

16. A radionuclide production arrangement, which includes
an irradiation zone, in which a target medium comprising at least a target nuclide material is provided;
a neutron irradiation source, which is provided in a neutron irradiation relationship with the target medium in the irradiation zone; and
a carbon-based recoil capture material, arranged to capture radionuclides which are ejected from the target nuclide material, the carbon-based recoil capture material not having an empty cage structure at crystallographic level.

## Patentansprüche

1. Verfahren zum Produzieren von Radionukliden, welches
Bestrahlen eines Zielmediums, welches mindestens ein Ziel-Nuklidmaterial umfasst, in einer Bestrahlungszone mit Neutronenbestrahlung, wobei verursacht wird, dass Radionuklide in dem Ziel-Nuklidmaterial gebildet werden, wobei mindestens einige der gebildeten Radionuklide aus dem Ziel-Nuklidmaterial ausgeworfen werden; und
Einfangen und Sammeln der ausgeworfenen Radionuklide in einem Kohlenstoff-basierten Rückstoß-Einfangmaterial *(englisch: recoil capture material),* welches auf kristallographischem Level keine leere Käfigstruktur hat, beinhaltet.

2. Verfahren nach Anspruch 1, wobei das Ziel-Nuklidmaterial ausgewählt ist aus der Gruppe bestehend aus einem reinen Metall und einer Metallverbindung.

3. Verfahren nach Anspruch 2, wobei das Metall des Ziel-Nuklidmaterials ausgewählt ist aus der Gruppe bestehend aus Metallelementen in dem Periodensystem der Elemente, welche sich von Scandium der Atomnummer 21 bis Bismut der Atomnummer 83, beide Elemente mit eingeschlossen, erstreckt, mit den nichtmetallischen Elementen Arsen, Selen, Brom, Krypton, Tellur, Iod und Xenon somit ausgeschlossen.

4. Verfahren nach Anspruch 3, wobei das Metall des Ziel-Nuklidmaterials Zinn ist.

5. Verfahren nach einem der Ansprüche 1 bis einschließlich 4, wobei das Rückstoß-Einfangmaterial ausgewählt ist aus amorphem Kohlenstoff, Kohlenstoffallotropen und Mischungen davon.

6. Verfahren nach einem der Ansprüche 1 bis einschließlich 5, wobei das Ziel-Nuklidmaterial und das Rückstoß-Einfangmaterial beide in fein aufgeteilter partikulärer Form sind und jeweils eine Partikelgröße von maximal ungefähr 50 nm haben.

7. Verfahren nach Anspruch 6, welches das Mischen des Ziel-Nuklidmaterials und des Rückstoß-Einfangmaterials beinhaltet, womit das Zielmedium somit sowohl Ziel-Nuklidmaterial als auch Rückstoß-Einfangmaterial umfasst.

8. Verfahren nach einem der Ansprüche 1 bis einschließlich 7, wobei das Bestrahlen des Zielmediums das Platzieren des Zielmediums in den Weg eines Neutronenflusses von einer Neutronenquelle beinhaltet.

9. Verfahren nach einem der Ansprüche 1 bis einschließlich 8, welches das Wiedergewinnen der eingefangenen Radionuklide aus dem Rückstoß-Einfangmaterial durch Behandeln des Rückstoß-Einfangmaterials mit einem Verdünner und/oder einem konzentrierten sauren Extraktionslösungsmittel, um dabei eine Rückstoß-Einfangmaterialsuspension zu bilden, und chemisches Extrahieren oder Auswaschen der eingefangenen Radionuklide aus dem Rückstoß-Einfangmaterial um ein Radionuklid-angereichertes Extraktionslösungsmittel zu erhalten, beinhaltet.

10. Verfahren nach Anspruch 9, welches Inkubieren der Rückstoß Einfangmaterialsuspension für einen Zeitraum, welcher nicht die Halbwertszeit der eingefangenen Radionuklide überschreitet, beinhaltet.

11. Verfahren nach Anspruch 9 oder Anspruch 10, welches Wiedergewinnen oder Trennen des Radionuklid-angereicherten Extraktionslösungsmittels von dem Rückstoß-Einfangmaterial mittels Zentrifugation, Vortextrennung und/oder Filtration beinhaltet.

12. Verfahren nach einem der Ansprüche 1 bis einschließlich 8, welches Wiedergewinnen der eingefangenen Radionuklide aus dem Rückstoß-Einfangmaterial durch Behandeln des Rückstoß-Einfangmaterials mit einem alkalischen Extraktionslösungsmittel beinhaltet.

13. Verfahren nach einem der Ansprüche 1 bis einschließlich 8, welches Wiedergewinnen der eingefangenen Radionuklide aus dem Rückstoß-Einfangmaterial durch Verbrennen des Rückstoß-Einfangmaterials in Sauerstoff beinhaltet.

14. Verfahren nach einem der Ansprüche 9 bis einschließlich 13, welches, wenn das Zielmedium eine Mischung des Rückstoß-Einfangmaterials und des Ziel-Nuklidmaterials umfasst, das Trennen des Rückstoß-Einfangmaterials von dem Ziel-Nuklidmaterial, bevor Radionuklide aus dem Rückstoß-Einfangmaterial wiedergewonnen werden, beinhaltet.

15. Verfahren nach Anspruch 14, wobei Trennen des Rückstoß-Einfangmaterials von dem Ziel-Nuklidmaterial mittels Flüssig-Flüssig-Extraktion, unter Verwendung einer wässrigen Flüssigkeit und einer organischen Flüssigkeit als Flüssig-Flüssig Extraktionslösungsmittel, erreicht wird.

16. Anordnung zur Produktion von Radionuklid, welche
eine Bestrahlungszone, in welcher ein Zielmedium umfassend mindestens ein Ziel-Nuklidmaterial bereitgestellt wird;
eine Neutronen Bestrahlungsquelle, welche in einer Neutronenbestrahlungszuordnung mit dem Zielmedium in der Bestrahlungszone bereitgestellt wird; und
ein Kohlenstoff-basiertes Rückstoß-Einfangmaterial, welches angeordnet ist um Radionuklide einzufangen, welche aus dem Ziel-Nuklidmaterial ausgeworfen werden, wobei das Kohlenstoff-basierte Rückstoß-Einfangmaterial auf kristallographischem Level keine leere Käfigstruktur hat, beinhaltet.

## Revendications

1. Procédé de production de radionucléides, qui comprend
dans une zone d'irradiation, l'irradiation d'un milieu cible, comportant au moins une matière nucléide cible, avec une irradiation neutronique, provoquant ainsi la formation de radionucléides dans la matière nucléide cible, au moins quelques-uns des radionucléides formés étant éjectés de la matière nucléide cible; et
la capture et la collecte des radionucléides éjectés, dans une matière de capture de recul à base de carbone qui n'a pas de structure de cage vide au niveau cristallographique.

2. Procédé selon la revendication 1, selon lequel la matière nucléide cible est sélectionnée dans le groupe comprenant un métal pur et un composé métallique.

3. Procédé selon la revendication 2, selon lequel le métal de la matière nucléide cible est sélectionné dans le groupe d'éléments métalliques du tableau périodique des éléments s'étendant du scandium, de numéro atomique 21, au bismuth, de numéro atomique 83, les deux éléments étant inclus, les éléments non métalliques que sont l'arsenic, le sélénium, le brome, le krypton, le tellure, l'iode et le xé-non, étant ainsi exclus.

4. Procédé selon la revendication 3, selon lequel le métal de la matière nucléide cible est l'étain.

5. Procédé selon l'une quelconque des revendications 1 à 4 comprise, selon lequel la matière de capture de recul est sélectionnée parmi le carbone amorphe, des allotropes du carbone et des mélanges de ceux-ci.

6. Procédé selon l'une quelconque des revendications 1 à 5 comprise, selon lequel la matière nucléide cible et la matière de capture de recul se présentent toutes deux dans un état particulaire finement divisé, ayant chacune une taille de particule moyenne sensiblement d'environ 50 nm.

7. Procédé selon la revendication 6, qui comprend le mélange de la matière nucléide cible et de la matière de capture de recul, le milieu cible comportant ainsi à la fois la matière nucléide cible et la matière de capture de recul.

8. Procédé selon l'une quelconque des revendications 1 à 7 comprise, selon lequel l'irradiation du milieu cible comprend la mise en place du milieu cible sur le chemin d'un flux de neutrons provenant d'une source de neutrons.

9. Procédé selon l'une quelconque des revendications 1 à 8 comprise, qui comprend la récupération des radionucléides capturés, à partir de la matière de capture de recul, en traitant la matière de capture de recul avec un solvant d'extraction acide dilué et/ou concentré, pour former ainsi une suspension de matière de capture de recul, et en réalisant une extraction chimique ou une lixiviation des radionucléides capturés, à partir de la matière de capture de recul, pour obtenir un solvant d'extraction enrichi en radionucléides.

10. Procédé selon la revendication 9, qui comprend l'incubation de la suspension de matière de capture de recul pendant un laps de temps qui ne dépasse pas la demi-vie des radionucléides capturés.

11. Procédé selon la revendication 9 ou la revendication 10, qui comprend la récupération ou la séparation d'un solvant d'extraction enrichi en radionucléides, à partir de la matière de capture de recul, au moyen d'une centrifugation, d'une séparation tourbillonnaire et/ou d'une filtration.

12. Procédé selon l'une quelconque des revendications 1 à 8 comprise, qui comprend la récupération des radionucléides capturés, à partir de la matière de capture de recul, en traitant la matière de capture de recul avec un solvant d'extraction alcalin.

13. Procédé selon l'une quelconque des revendications 1 à 8 comprise, qui comprend la récupération des radionucléides capturés, à partir de la matière de capture de recul, en brûlant la matière de capture de recul dans de l'oxygène.

14. Procédé selon l'une quelconque des revendications 9 à 13 comprise, qui comprend, lorsque le milieu cible comporte un mélange de la matière de capture de recul et de la matière nucléide cible, la séparation de la matière de capture de recul de la matière nucléide cible, avant de récupérer les radionucléides de la matière de capture de recul.

15. Procédé selon la revendication 14, selon lequel la séparation de la matière de capture de recul de la matière nucléide cible est réalisée au moyen d'une extraction liquide-liquide, en utilisant un liquide aqueux et un liquide organique en tant que solvants d'extraction liquide-liquide.

16. Installation de production de radionucléides, qui comprend
une zone d'irradiation, dans laquelle est mise en place un milieu cible comportant au moins une matière nucléide cible;
une source d'irradiation neutronique, qui est prévue dans une relation d'irradiation neutronique avec le milieu cible dans la zone d'irradiation; et
une matière de capture de recul à base de carbone, apte à capturer les radionucléides qui sont éjectés de la matière nucléide cible, la matière de capture de recul à base de carbone ne présentant pas une structure de cage vide au niveau cristallographique.
